# FASCICULE DE BREVET EUROPEEN

(11) **EP 1 806 046 B1**
(45) Date de publication et mention de la délivrance du brevet: **11.04.2012**
(21) Numéro de dépôt: 06301299.1
(22) Date de dépôt: 27.12.2006
(51) Int. Cl.: A01D 43/077, A01D 43/073, A01D 34/86

(54) **Installation pour la découpe et le broyage de végétaux**
Mäh- und Zerkleinerungsvorrichtung für Pflanzengut
Device for cutting and grinding plants

(30) Priorité: 30.12.2005 FR 0513497
(43) Date de publication de la demande: 11.07.2007
(73) Titulaire: INGENIERIE DESIGN & CREATION, 85140 Les Essarts (FR)
(72) Inventeur: Rabaud, Claude, 85110 Sainte-Cécile (FR); Duret, Léon, 85480 Fougere (FR); Boursier, Christian, 49300 Cholet (FR)
(74) Mandataire: Michelet, Alain

(56) Documents cités:
- DE-A1- 2 415 230
- DE-A1- 2 552 083
- DE-A1- 3 039 595
- DE-U- 7 218 802

## Description

La présente invention concerne les installations de broyage ou de découpe/broyage de végétaux qui sont portées par un engin tracteur, notamment pour la taille de haies ou l'entretien d'accotements.

Une installation pour l'entretien d'accotements est par exemple décrite dans le document DE-A-24 15 230. Cette installation comprend une unité de découpe/broyage montée sur un châssis roulant qui est manoeuvré par un bras s'étendant à partir d'un engin tracteur.
Le châssis roulant porteur de l'unité de découpe/broyage est encore équipé de moyens ventilateurs prolongés par une canalisation souple permettant la propulsion des végétaux broyés dans une remorque attelée à l'engin tracteur.
Mais l'ensemble constitué par l'unité de découpe/broyage et les moyens ventilateurs n'est pas très facile à manoeuvrer, en particulier du fait de son encombrement et de son poids.

Une tête de découpe et de broyage très facilement manipulable, montée à l'extrémité d'un bras de manipulation spatiale et munie d'un orifice d'évacuation des végétaux broyés, a été développée par la société demanderesse et décrite dans le document FR-2 892 267.

Cette tête de découpe/broyage est constituée de deux ensembles de disques rotatifs coplanaires, adaptés pour découper les végétaux et pour les orienter vers un broyeur dont le rotor interne, en plus de sa fonction de broyage, assure l'éjection des végétaux broyés, soit vers le sol, soit vers un réceptacle de stockage.
Dans ce dernier cas notamment, l'orifice d'évacuation du broyeur se prolonge par une canalisation souple en matière plastique qui s'étend jusqu'à ce réceptacle de stockage, généralement une remorque associée à l'engin tracteur.

Mais lorsque l'on souhaite récupérer les produits broyés dans un tel réceptacle, la puissance d'éjection du broyeur peut se révéler insuffisante et en tout cas pas complètement optimale. De plus, il est alors nécessaire de prévoir une canalisation souple dont la longueur totale est adaptée aux possibilités d'extension maximale du bras de manipulation spatiale de la tête de travail, ce qui impose une longueur de canalisation assez importante, la rendant ainsi encombrante.

On rencontre des problèmes similaires avec certaines têtes de broyage connues, constituées d'un ou de plusieurs rotors broyeurs monté(s) à l'extrémité d'un bras de manipulation.

Pour remédier à ces inconvénients, dans le cadre d'une installation de découpe et de broyage de végétaux, comprenant une tête de travail équipant un bras de manipulation spatiale porté par un engin tracteur, cette tête de travail comportant un orifice d'éjection des végétaux broyés, la présente invention propose de prolonger l'orifice d'éjection de la tête de travail par une canalisation souple aboutissant à des moyens ventilateurs équipés d'une goulotte d'éjection apte à propulser les végétaux broyés dans un réceptacle de stockage tel qu'une remorque associée à l'engin tracteur, ledit ensemble ventilateur/goulotte étant porté par un bras complémentaire, distinct du bras de manipulation de la tête de travail, lequel bras complémentaire s'étend en porte-à-faux à partir de l'engin tracteur, et est apte à se déployer et à se replier pour suivre au moins en partie les mouvements de la tête de travail, ceci dans un plan perpendiculaire ou sensiblement perpendiculaire au sens de déplacement dudit engin tracteur. En outre, des moyens mécaniques appropriés permettent d'assurer en permanence l'orientation de la goulotte d'éjection en direction du réceptacle de stockage des végétaux broyés, ceci quelle que soit la position de sa structure mobile porteuse.

L'ensemble ventilateur/goulotte suit au moins partiellement les mouvements de la tête de travail, ce qui permet de limiter la longueur nécessaire de la canalisation souple qui raccorde ces deux éléments. Les moyens ventilateurs génèrent une dépression qui entraîne l'aspiration des végétaux broyés par la tête de travail, et leur refoulement vers la goulotte d'éjection mobile qui est adaptée, en toutes circonstances, pour assurer leur projection dans le réceptacle de stockage.

Selon une forme de réalisation particulièrement intéressante, la goulotte d'éjection est montée à rotation autour d'un axe vertical ou sensiblement vertical au-dessus des moyens ventilateurs, par des moyens adaptés, sa manoeuvre en rotation, pour assurer son orientation permanente en direction du réceptacle de stockage, étant assurée par une biellette la reliant de manière adaptée à une partie structurelle de son bras porteur.

Dans un mode de réalisation particulier, le bras complémentaire, qui porte l'ensemble ventilateur/goulotte, est en forme générale de compas muni de deux branches articulées entre elles, chacune constituée d'un assemblage de bras et biellettes formant des pseudo-parallélogrammes déformables. L'une des extrémités de la première branche de ce compas est articulée sur le châssis de l'engin tracteur, ceci uniquement sur un secteur angulaire donné, autour de deux axes parallèles ou sensiblement parallèles au sens de déplacement dudit engin tracteur, et l'une des extrémités de la seconde branche de ce compas est articulée autour de la seconde extrémité de ladite première branche, par l'intermédiaire de deux axes d'articulation parallèles ou sensiblement parallèles au sens de déplacement de l'engin tracteur, la seconde extrémité de ladite seconde branche portant ledit ensemble ventilateur/goulotte, encore par l'intermédiaire de deux axes d'articulation parallèles ou sensiblement parallèles au sens de déplacement dudit engin tracteur, ceci de telle sorte que ledit ensemble ventilateur/goulotte se déplace parallèlement ou sensiblement parallèlement à lui-même lors des mouvements de son bras porteur.

De manière avantageuse, la biellette d'extrémité de la première branche dudit compas se prolongeant pour former l'un des bras de la seconde branche de ce compas.

De préférence, les deux branches de compas sont agencées pour revenir automatiquement en position repliée, c'est-à-dire dans une position où elles s'étendent toutes les deux sensiblement verticalement, ceci par simple gravité.

Selon une autre caractéristique, l'installation comporte avantageusement une structure de liaison, en forme de chaîne ou de câble, fixée entre l'ensemble ventilateur/goulotte et la tête de travail. Cette structure de liaison permet de limiter à une valeur donnée la distance de séparation entre ledit ensemble ventilateur/goulotte et ladite tête de travail, pour supporter les efforts de traction sur ledit ensemble ventilateur/goulotte, et éviter ainsi de faire supporter ces efforts par la canalisation souple reliant la tête de travail et le ventilateur.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue en perspective d'une installation de découpe et de broyage conforme à l'invention, installée sur un engin tracteur et représentée de manière déployée ;
- la figure 2 est une vue de dessus de l'installation illustrée figure 1 :
- la figure 3 montre l'installation des figures 1 et 2 vue par derrière ;
- la figure 4 montre encore la même installation, vue de côté ;
- la figure 5 est une vue de derrière, toujours de la même installation, ici illustrée en position repliée ;
- la figure 6 est une vue de détail du bras porteur de l'ensemble ventilateur/goulotte, à l'état déployé ;
- la figure 7 est une vue similaire à la figure 6, montrant le bras porteur de l'ensemble ventilateur/goulotte à l'état replié ;
- la figure 8 est une vue schématique illustrant les moyens qui permettent de gérer l'orientation de la goulotte d'éjection en fonction des mouvements de son bras porteur.

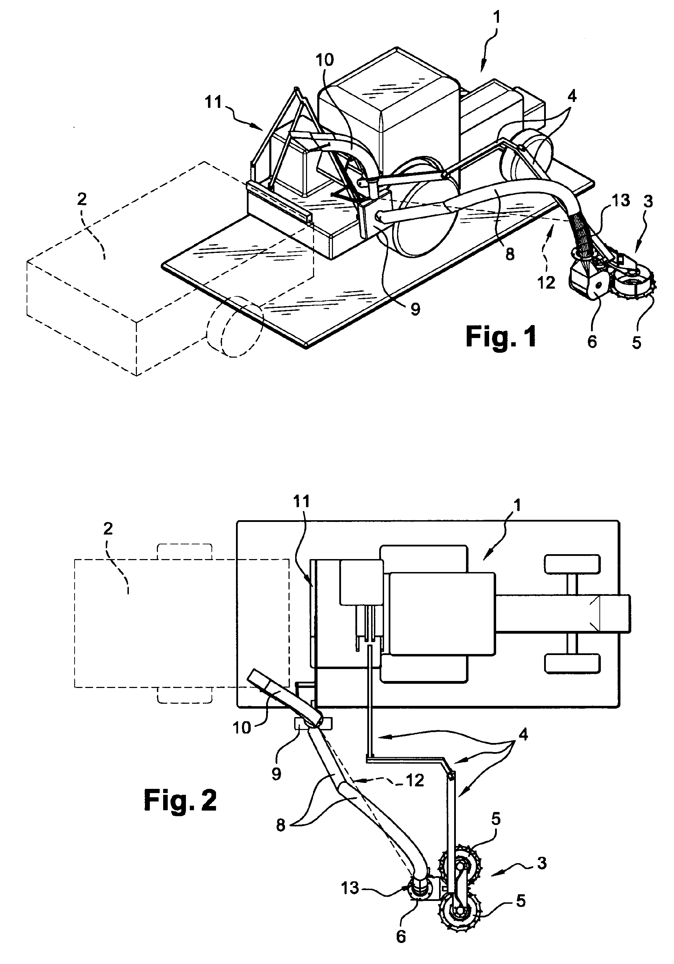

Tel qu'illustré sur les figures 1 à 5, l'installation de découpe et de broyage équipe un engin tracteur 1, par exemple un tracteur de type agricole, muni à l'arrière d'une remorque tractée 2, simplement représentée en pointillés sur les figures 1, 2 et 4.
Cette installation comprend une tête de découpe et de broyage 3 portée par un bras de manipulation spatiale 4 s'étendant en porte-à-faux à partir de l'engin tracteur 1. La tête de découpe/broyage 3 est du type de celle décrite dans le document FR-2 892 267 , c'est-à-dire qu'elle est constituée de deux ensembles de disques circulaires coplanaires 5 dont la fonction est de découper les végétaux et de les orienter vers un système broyeur 6 en vue de les réduire en morceaux de petite dimension. En plus de sa fonction de broyage le rotor interne du broyeur 6 propulse les végétaux broyés, par son orifice d'éjection, dans une canalisation souple 8, par exemple en matière plastique.
Conformément à la présente invention, cette canalisation souple 8 aboutit à des moyens ventilateurs 9 qui aspirent le broyat et le refoulent vers le haut dans une goulotte d'éjection 10 agencée pour alimenter la remorque 2 par projection.
La goulotte 10 est montée directement sur le dessus du carter du ventilateur 9 de la manière détaillée plus loin.

Le ventilateur 9 et la goulotte 10 sont montés à l'extrémité d'un bras mobile 11 qui s'étend en porte-à-faux depuis l'arrière de l'engin tracteur 1. Ce bras 11 est mobile perpendiculairement ou sensiblement perpendiculairement à la direction d'avancement de l'engin tracteur 1 ; il est structuré pour permettre son extension latérale sous l'effet d'une traction sur son extrémité en porte-à-faux, et pour revenir en position repliée, par simple gravité, lorsque la force de traction précitée disparaît.

Un moyen de liaison souple en forme de chaîne ou de câble 12 relie l'ensemble ventilateur/goulotte 9, 10 à la tête de travail 3, pour limiter à une distance maximale l'écartement entre ces deux éléments.
L'une des extrémités de cette chaîne (ou câble) 12 peut être fixée sur le carter du ventilateur 9, l'autre extrémité étant fixée soit sur le carter du broyeur 6, soit sur un tronçon de tube métallique 13 (par exemple du type à « écailles ») faisant la liaison entre la canalisation souple 8 et l'orifice d'éjection du broyeur 6.

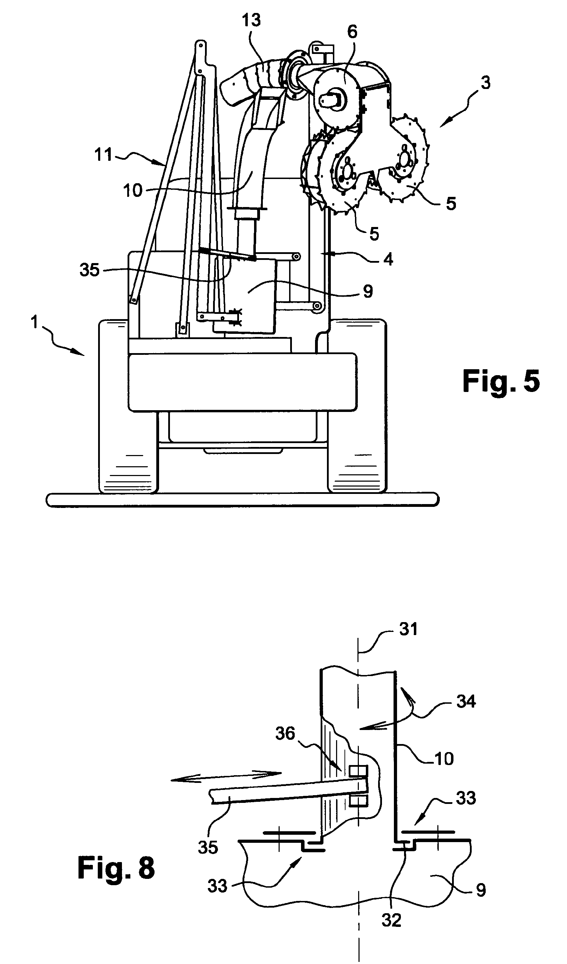

A l'état inactif ou pour les manoeuvres de déplacement, les deux bras mobiles 4 et 11 sont repliés de la manière illustrée sur la figure 5. L'encombrement en largeur de l'installation ne dépasse pas (ou dépasse de peu) l'encombrement en largeur de l'engin tracteur 1.

En fonctionnement, l'opérateur placé dans la cabine de l'engin tracteur commande le positionnement de la tête de travail 3 pour réaliser le travail souhaité, ceci par la manipulation du bras de manoeuvre 4 (déploiement, repliement, orientation spatiale).
Lorsque la tête de travail 3 s'écarte de l'engin tracteur 1 d'une distance donnée, on comprend que l'ensemble ventilateur/goulotte 9, 10 suit ses mouvements du fait de la présence du moyen de liaison 12 et des capacités d'extension du bras porteur 11. Cela permet de limiter la longueur nécessaire de la canalisation souple 8 (on évite ainsi la présence de grandes longueurs de canalisations qui seraient source d'encombrement et de gêne au travail).
Les moyens de liaison 12 en forme de chaîne ou de câble réalisent la traction sur l'ensemble ventilateur/goulotte 9, 10, évitant ainsi de faire supporter les efforts correspondants par la canalisation souple 8.

Comme indiqué précédemment, le bras mobile 11 qui porte à son extrémité libre l'ensemble ventilateur/goulotte 9, 10 est structuré pour permettre son extension dans un plan perpendiculaire ou sensiblement perpendiculaire au sens de déplacement de l'engin tracteur, sous l'effet d'une traction par les moyens de liaison 12, et son repliement automatique par simple gravité.
D'autre part, la structure de ce bras est adaptée pour assurer un déplacement de l'ensemble ventilateur/goulotte 9, 10 de manière sensiblement parallèlement à lui-même. En outre, et du fait des possibilités de déplacement latéral de la goulotte 10, il est prévu des moyens, détaillés plus loin, pour assurer en permanence une orientation correcte de la goulotte d'éjection 10 par rapport à la remorque 2, ceci quelle que soit la position du bras porteur 11.

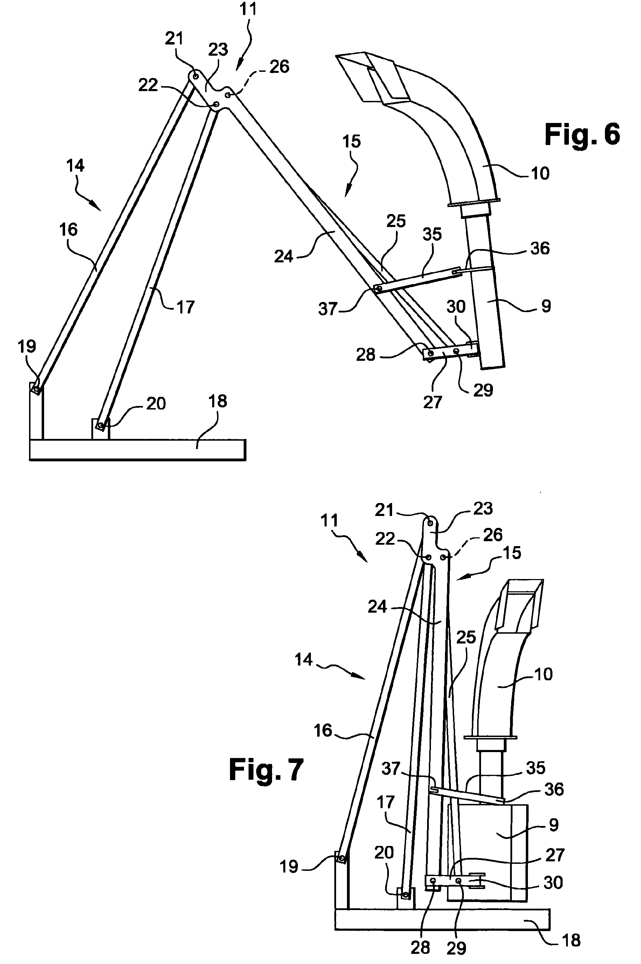

La structure particulière du bras porteur 11 est détaillée sur les figures 6 et 7. Comme on peut le voir sur ces deux figures, ce bras 11 est en forme générale de compas constitué de deux branches 14 et 15 articulées entre elles et chacune en forme de pseudo-parallélogramme déformable. Ces deux branches 14 et 15 forment ensemble un Vé dont la pointe est orientée vers le haut.
La première branche 14 du compas 11 comprend deux longs bras 16 et 17 dont l'une des extrémités (extrémité inférieure) est articulée sur le châssis 18 de l'engin tracteur 1, respectivement en 19 et 20, et dont l'autre extrémité (extrémité supérieure) est articulée, respectivement en 21 et 22 sur une biellette 23. Les deux bras 16 et 17 ont sensiblement la même longueur.
L'articulation 19 du bras 16 sur le châssis 18 est prévue plus haute que celle 20 du bras 17.
La distance séparant les deux articulations supérieures 21 et 22 est plus petite que la distance séparant les deux articulations inférieures 19 et 20 ; ainsi, les deux bras 16 et 17 ne s'étendent pas complètement parallèlement l'un à l'autre et l'ensemble forme donc un pseudo-parallélogramme (c'est-à-dire une structure approchant un parallélogramme déformable, mais qui n'en est pas un).

Du fait de la structure décrite ci-dessus, la première branche 14 du compas 11 dispose d'une possibilité d'articulation sur uniquement un secteur angulaire donné autour des axes 19 et 20.

La seconde branche 15 du compas 11 s'étend en porte-à-faux, vers le bas, à partir de l'extrémité supérieure de la première branche 14.
Cette seconde branche 15 comprend aussi deux longs bras 24 et 25. Le premier bras 24 consiste en fait en un prolongement monobloc de la biellette 23 de la première branche 14. Le second bras 25, de longueur voisine à celle du premier 24, est articulé en 26 sur un petit prolongement du bras 17. Au niveau de leur extrémité inférieure, les bras 24 et 25 sont articulés sur une biellette 27, respectivement en 28 et 29.
Ici encore, du fait du positionnement des articulations 22, 26, 28 et 29, les deux bras 24 et 25 ne s'étendent pas tout-à-fait parallèlement l'un à l'autre et l'ensemble de la seconde branche 15 forme donc un pseudo-parallélogramme déformable.

Les différentes articulations 19, 20, 21, 22, 26, 28 et 29 sont toutes parallèles entre elles et elles s'étendent dans le sens de déplacement de l'engin tracteur (ou sensiblement dans ce sens de déplacement), de manière à obtenir le déploiement latéral précité du bras porteur 11. Lors du déploiement ou du repliement du compas 11, chacune de ses deux branches 14 et 15 dispose d'une possibilité de mouvement uniquement sur un secteur angulaire donné.

L'une des extrémités de la biellette 27 comporte un prolongement monobloc 30 qui sert de support à l'ensemble ventilateur/goulotte 9, 10.

En l'absence de traction appliquée au niveau de son extrémité libre, la structure de compas 11 se positionne naturellement à l'état replié (figure 7). Dans cette position repliée, les deux branches 14 et 15 du compas s'étendent pratiquement verticalement (elles sont en contact ou quasiment en contact l'une avec l'autre).
Une traction sur cette extrémité libre (par l'intermédiaire de la chaîne 12 précitée) assure le déploiement des deux branches du compas, ceci de telle sorte que l'ensemble ventilateur/goulotte se déplace presque parallèlement à lui-même (la biellette 27, quasiment horizontale, se déplace presque parallèlement à elle-même). En fait, la structure du compas en pseudo-parallélogrammes déformables est agencée pour permettre son retour automatique en position repliée et elle assure également une légère inclinaison de l'ensemble ventilateur/goulotte en direction de son bras porteur 11, au fur et à mesure du déploiement de ce dernier, favorisant une bonne orientation de la goulotte par rapport à la remorque de stockage 2, en association avec les moyens de pivotement sur elle-même détaillés ci-après.

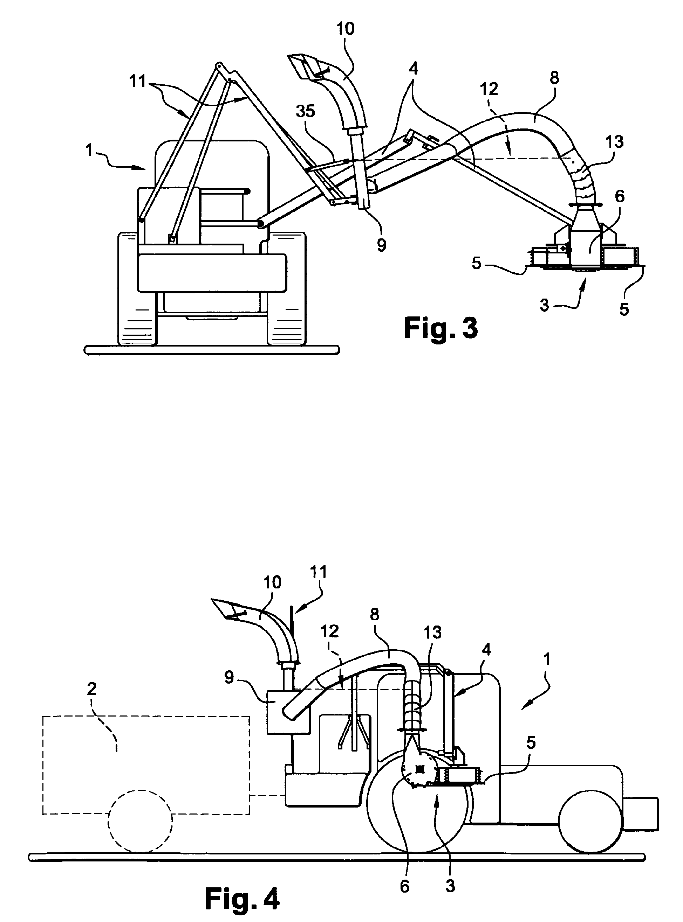

En effet, comme on peut le voir de manière schématique sur la figure 8, la goulotte 10 est montée à rotation autour d'un axe vertical 31 sur le dessus du ventilateur 9, ceci par l'intermédiaire d'une couronne inférieure 32 prise en sandwich de manière libre entre les deux joues d'un étrier fixe circulaire 33 solidaire du carter du ventilateur 9. En outre, cette goulotte 10 est manoeuvrée en rotation, selon la flèche d'orientation 34, par une biellette 35 qui la relie à la seconde branche 15 du parallélogramme déformable, et en particulier au bras 24 (voir figures 3, 6 et 7 notamment).
La rotation (ou pivotement) correspondante, liée à la variation de l'angle entre la biellette 27 et le bras 24 au cours de l'extension ou du repliement du bras 11, est adaptée pour que l'orifice de sortie de la goulotte 10 soit en permanence automatiquement correctement orienté pour projeter le broyat de végétaux dans la remorque 2, ceci quelle que soit la position (étendue, repliée ou intermédiaire) du bras porteur 11. La variation angulaire correspondante, entre les deux positions extrêmes de la goulotte 10, peut être de l'ordre de 50°.
Les points de fixation de la biellette 35, repérés respectivement 36 et 37, sur la goulotte 10 et sur le bras 24, sont adaptés en conséquence.
Comme indiqué ci-dessus, ce mouvement de rotation coopère avec le léger basculement de l'ensemble ventilateur/goulotte 9, 10 lors des mouvements du bras porteur 11.

Dans une variante de réalisation de l'invention, l'ensemble ventilateur/goulotte 9, 10 peut être porté directement par le bras de manipulation 4 de la tête de travail 3. Dans ce cas, de préférence, il sera également prévu des moyens assurant l'orientation automatique de la goulotte 10 par rapport au réceptacle 2 de stockage du broyat de végétaux, ces moyens étant avantageusement de type mécanique, en forme de bielle reliée à l'un des tronçons du bras de manipulation 4.

On notera que les moyens conformes à la présente invention peuvent aussi équiper des têtes de travail munies simplement d'un ou de plusieurs rotors formant broyeurs agencés à l'extrémité d'un bras de manipulation spatiale.

## Revendications

1. Installation pour la découpe et le broyage de végétaux, comprenant une tête de travail (3) équipant un bras (4) de manipulation spatiale porté par un engin tracteur (1), ladite tête de travail (3) comportant un orifice d'éjection des végétaux broyés, **caractérisée en ce que** ledit orifice d'éjection se prolonge par une canalisation souple (8) aboutissant à des moyens ventilateurs (9) équipés d'une goulotte d'éjection (10) apte à propulser lesdits végétaux broyés dans un réceptacle de stockage (2) tel qu'une remorque associée audit engin tracteur (1), lequel ensemble ventilateur/goulotte (9, 10) est porté par un bras complémentaire (11), distinct du bras (4) de manipulation de la tête de travail (3), lequel bras complémentaire (11), s'étendant en porte-à-faux à partir de l'engin tracteur (1), est apte à se déployer et à se replier pour suivre au moins en partie les mouvements de ladite tête de travail (3), ceci dans un plan perpendiculaire ou sensiblement perpendiculaire au sens de déplacement dudit engin tracteur (1), et **en ce qu'**elle comporte des moyens mécaniques (32, 33, 35) qui permettent d'assurer en permanence l'orientation de ladite goulotte d'éjection (10) en direction dudit réceptacle de stockage (2) des végétaux broyés, quelle que soit la position de son bras mobile porteur (11).

2. Installation selon la revendication 1, **caractérisée en ce que** la goulotte d'éjection (10) est montée à rotation autour d'un axe vertical ou sensiblement vertical (31) au-dessus du ventilateur (9) par des moyens adaptés (32, 33), sa manoeuvre en rotation, pour assurer son orientation permanente en direction du réceptacle de stockage (2), étant assurée par une biellette (35) la reliant de manière adaptée à une partie structurelle (24) du bras porteur (11).

3. Installation selon l'une quelconque des revendications 1 ou 2, **caractérisée en ce que** le bras complémentaire (11) est en forme générale de compas muni de deux branches (14, 15) articulées entre elles, constituées chacune d'un assemblage de bras et biellettes (16, 17, 23, 24, 25, 27) formant des pseudo-parallélogrammes déformables, l'une des extrémités de la première branche (14) dudit compas (11) étant articulée sur le châssis (18) dudit engin tracteur (1), ceci uniquement sur un secteur angulaire donné, autour de deux axes (19, 20) parallèles ou sensiblement parallèles au sens de déplacement dudit engin tracteur (1), et l'une des extrémités de la seconde branche (15) dudit compas (11) étant articulée autour de la seconde extrémité de ladite première branche (14), par l'intermédiaire de deux axes d'articulation (22, 26) parallèles ou sensiblement parallèles au sens de déplacement de l'engin tracteur (1), la seconde extrémité de ladite seconde branche (15) portant l'ensemble ventilateur/goulotte (9, 10) par l'intermédiaire de deux axes d'articulation (28, 29) également parallèles ou sensiblement parallèles au sens de déplacement dudit engin tracteur, ceci de telle sorte que ledit ensemble ventilateur/goulotte (9, 10) se déplace parallèlement ou sensiblement parallèlement à lui-même lors des mouvements de son bras porteur (11).

4. Installation selon la revendication 3, **caractérisée en ce que** la biellette d'extrémité (23) de la première branche (14) du compas (11) se prolonge pour former l'un des bras (24) de la seconde branche (15) dudit compas (11).

5. Installation selon l'une quelconque des revendications 3 ou 4, **caractérisée en ce que** les deux branches de compas (14, 15) sont agencées pour revenir automatiquement en position repliée, c'est-à-dire dans une position où elles s'étendent toutes les deux sensiblement verticalement, ceci par simple gravité.

6. Installation selon l'une quelconque des revendications 1 à 5, **caractérisée en ce qu'**elle comporte une structure de liaison (12), en forme de chaîne ou de câble, fixée entre l'ensemble ventilateur/goulotte (9, 10) et la tête de travail (3), laquelle structure de liaison (12) limite à une valeur donnée la distance de séparation entre ledit ensemble ventilateur/goulotte (9, 10) et ladite tête de travail (3), pour supporter les efforts de traction sur ledit ensemble ventilateur/goulotte (9, 10) et éviter de faire supporter ces efforts par la canalisation souple (8) reliant ladite tête de travail (3) et ledit ventilateur (9).

## Claims

1. A system for cutting and crushing vegetation, comprising an operating (3) equipping a spatial handling arm (4) carried by a tractor vehicle (1), said operating head (3) comprising an orifice for ejection of the crushed vegetation, **characterized in that** said ejection orifice is by a flexible duct (8) leading to fan means (9) equipped with an ejection chute (10) adapted to throw said crushed vegetation into a storing receptacle (2) such as a trailer associated with said tractor vehicle (1), wherein said fan/chute unit (9, 10) is carried by a complementary arm (11), distinct from the arm (4) for handling the operating heal (3), wherein said complementary arm (11), extending cantilevered from the tractor vehicle (1), is adapted to be unfolded and folded to follow at least in the movements of said operating head (3), in a plane that is perpendicular or substantially perpendicular to the moving direction of said tractor vehicle (1), and **in that** it comprises mechanical means (32, 33, 35) for permanently providing the orientation of said ejection chute (10) toward said crushed vegetation storage receptacle (2), whatever the position of its carrier mobile arm (11).

2. A system according to claim 1, **characterized in that** the ejection chute (10) is rotationally mounted around a vertical or substantially vertical axis (31) above the fan (9), by suitable means (32, 33), wherein the rotational operation thereof, for providing the permanent orientation thereof toward the storage receptacle (2), is provided by a connecting rod (35) connecting it in a suitable way to a structural part (24) of the carrier arm (11).

3. A system according to any one of claims 1 or 2, **characterized in that** the complementary arm (11) has the general shape of a compass provided with two legs (14, 15) articulated to each other, each consisted of an assembly of arms and connecting rods (13, 17, 3, 24, 27) forming deformable pseudo-parallelograms, one end of the first leg (14) of said compass (11) being articulated to the chassis (18) of said tractor vehicle (1), only over a given angular sector, around two axes (19, 20) parallel or substantially parallel to the moving direction of said tractor vehicle (1), and one end of the second leg (15) of said compass (11) being around the second end of said first leg (14), through two articulation axis (22, 26) parallel or substantially parallel to the moving direction of the tractor vehicle (1), the second end of said second leg (15) carrying the fan/chute unit (9, 10) through two articulation axes (28, 29) also parallel or substantially parallel to the moving direction of said tractor vehicle, in such a manner that said fan/chute unit (9, 10) moves parallel or substantially parallel to itself during the movements of its carrier arm (11).

4. A system according to claim 3, **characterized in that** the end connecting rod (23) of the first leg (14) of the compass (11) is extended, so as to form one of the arms (24) of the second leg (15) of said compass (11).

5. A system according to any one of claims 3 or 4, **characterized in that** the two compass legs (14, 15) are arranged to as to automatically come back to the folded position, i.e. in a position in which they both extend substantially vertically, by simple gravity.

6. A system according to any one of claims 1 to 5, **characterized in that** it comprises a linking structure (12), in the form of a chain or a cable, fastened the fan/chute unit (9, 10) and the operating (3), wherein said linking structure (12) limits to a given value the distance of separation said fan/chute unit (9, 10) and said operating head (3), so as to support the pulling efforts exerted on said fan/chute unit (9, 10) and to avoid that the flexible duct (8) connecting said operating head (3) and said fan (9) supports these efforts.

## Patentansprüche

1. Mäh- und Zerkleinerungsvorrichtun für Pflanzengut, welche einen Arbeitskopf (3) umfasst, der an einem räumlichen Manipulationsarm (4) angebracht ist, der von einer Zugmaschine (1) getragen wird, wobei der Arbeitskopf (3) eine Auswurföffnung für das zerkleinerte Pflanzengut aufweist, **dadurch gekennzeichnet, dass** die Auswurföffnung durch eine flexible Leitung (8) verlängert ist, die zu Ventilatormitteln (9) führt, die mit einem Auswurfrohr (10) ausgestattet sind, das geeignet ist, das zerkleinerte Pflanzengut in einen Lagerbehälter (2) wie etwa einen Anhänger, welcher der Zugmaschine (1) zugeordnet ist, zu schleudern, wobei die Einheit Ventilator/Auswurfrohr (9, 10) von einem zusätzlichen Arm (11) getragen wird, der von dem Manipulationsarm (4) des Arbeitskopfes (3) verschieden ist, wobei der zusätzliche Arm (11), der sich von der Zugmaschine (1) auskragend erstreckt, geeignet ist auszufahren und zurückzuklappen, um den Bewegungen des Arbeitskopfes (3) wenigstens teilweise zu folgen, und zwar in einer Ebene, die senkrecht oder im Wesentlichen senkrecht zur Fahrtrichtung der Zugmaschine (1) ist, und dadurch, dass sie mechanische Mittel (32, 33, 35) aufweist, die es ermöglichen, ständig die Ausrichtung des Auswurfrohres (10) in Richtung des Lagerbehälters (2) des zerkleinerten Pflanzenguts sicherzustellen, unabhängig von der Position seines beweglichen Tragarms (11).

2. Vorrichtung nach Anspruch 1, **dadurch gekennzeichnet, dass** das Auswurfrohr (10) oberhalb des Ventilators (9) durch geeignete Mittel (32, 33) um eine vertikal oder im Wesentlichen vertikale Achse (31) drehbar gelagert ist, wobei seine Drehbetätigung, um seine ständige Ausrichtung in Richtung des Lagerbehälters (2) sicherzustellen, durch eine Stange (35) gewährleistet wird, die es auf geeignete Weise mit einem Strukturteil (24) des Tragarms (11) verbindet.

3. Vorrichtung nach einem der Ansprüche 1 oder 2, **dadurch gekennzeichnet, dass** der zusätzliche Arm (11) die allgemeine Form eines Zirkels aufweist, der mit zwei gelenkig miteinander verbundenen Schenkeln (14, 15) ausgestattet ist, welche jeweils aus einem Verband von Armen und Stangen (16, 17, 23, 24, 25, 27) bestehen, die verformbare parallelogrammartige Strukturen bilden, wobei eines der Enden des ersten Schenkels (14) des Zirkels (11) an dem Fahrgestell (18) der Zugmaschine (1) angelenkt ist, und zwar so, dass es ausschließlich in einem gegebenen Winkelsektor um zwei Achsen (19, 20) schwenkbar ist, die zur Fahrtrichtung der Zugmaschine (1) parallel oder im Wesentlichen parallel sind, und wobei eines er Enden des zweiten Schenkels (15) des Zirkels (11) an dem zweiten Ende des ersten Schenkels (14) über zwei Gelenkbolzen (22, 26) angelenkt ist, die zur Fahrtrichtung der Zugmaschine (1) parallel oder im Wesentlichen parallel sind, wobei das zweite Ende des zweiten Schenkels (15) die Einheit Ventilator/Auswurfrohr (9, 10) über zwei Gelenkbolzen (28, 29) trägt, die ebenfalls zur Fahrtrichtung der Zugmaschine parallel oder im Wesentlichen parallel sind, derart, sich die Einheit Ventilator/Auswurfrohr (9, 10) bei Bewegungen ihres Tragarms (11) parallel oder im Wesentlichen parallel zu sich selbst bewegt.

4. Vorrichtung nach Anspruch 3, **dadurch gekennzeichnet, dass** die Endstange (23) des ersten Schenkels (14) des Zirkels (11) verlängert ist, um einen der Arme (24) des zweiten Schenkels (15) des Zirkels (11) zu bilden.

5. Vorrichtung nach einem der Ansprüche 3 oder 4, **dadurch gekennzeichnet, dass** die beiden Zirkelschenkel (14, 15) dazu eingerichtet sind, automatisch in die zusammengeklappte Position zurückzukehren, das heißt in position, in der sie sich durch einfache Schwerkraft beide im Wesentlichen vertikal erstrecken.

6. Vorrichtung nach einem der Ansprüche 1 bis 5, **dadurch gekennzeichnet, dass** sie eine Verbindungsstruktur (12) in Form einer Kette oder eines Kabels aufweist, die zwischen der Einheit Ventilator/Auswurfrohr (9, 10) und dem Arbeitskopf (3) befestigt ist, wobei die Verbindungsstruktur (12) den Abstand zwischen der Einheit Ventilator/Auswurfrohr (9, 10) und dem Arbeitskopf (3) auf einen gegebenen Wert begrenzt, um die auf die Einheit Ventilator/Auswurfrohr (9, 10) wirkenden Zugkräfte aufzunehmen und zu vermeiden, dass diese Kräfte von der flexiblen Leitung (8) aufgenommen werden, welche den Arbeitskopf (3) und den Ventilator (9) verbindet.
